# EUROPÄISCHE PATENTANMELDUNG

(11) **EP 0 971 177 A2**
(43) Veröffentlichungstag der Anmeldung: **12.01.2000**
(21) Anmeldenummer: 99113058.4
(22) Anmeldetag: 06.07.1999
(51) Int. Cl.: F24D 3/16

(54) **Strahlheizflächenkonstruktion**

(30) Priorität: 07.07.1998 DE 19830245
(71) Anmelder: Menge, Klaus, 64823 Gross-Umstadt (DE)
(72) Erfinder: Menge, Klaus, 64823 Gross-Umstadt (DE)
(74) Vertreter: KEIL & SCHAAFHAUSEN

(57) **Zusammenfassung**

Die Erfindung bezieht sich auf eine Strahlheizflächenkonstruktion mit einer Abhängung und Strahlplatten (1, 15) aus Stahl- oder Aluminiumblech, welche z.B. unter entsprechender Profilierung wenigstens einer Randaufkantung (2) an wenigstens einem von im Abstand voneinander angeordneten Heizrohren (3, 16) eines Heizrohrregisters zur Wärmeübertragung auf- bzw. anliegen. Zur Verbesserung der Wirksamkeit sind die Strahlplatten (1, 15) von der Rückseite des Heizrohrregisters her unter Freihaltung eines vorderseitigen Abstrahlbereichs (4) des jeweiligen Heizrohrs (3, 16) an bzw. auf den Heizrohren (3, 16) montiert.

## Beschreibung

Die Erfindung bezieht sich auf eine Strahlheizflächenkonstruktion, insbesondere eine Strahlheizdecke, mit einer Aufhängung und mit Strahlplatten aus verhältnismäßig dünnem Stahl- oder Aluminiumblech, welche plan oder unter entsprechender Profilierung wenigstens einer Randaufkantung auf bzw. an wenigstens einem von im Abstand voneinander angeordneten Heizrohren eines Heizrohrregisters zur Wärmeübertragung anliegen.

Eine derartige Strahlheizflächenkonstruktion ist beispielsweise aus der DE-PS 972 683 oder der DE 297 04 570 U1 bekannt. Bei derartigen Strahlheizflächenkonstruktionen sind die wasserführenden Heizrohre mit Hilfe der Strahlplatten sichtseitig verkleidet. Nachteilig hierbei ist, daß die Heizrohre durch die Verkleidung abgedeckt in ihrer Wärmeübertragung in den zu beheizenden Raum behindert werden.

Aufgabe der vorliegenden Erfindung ist es, bei einer Strahlheizflächenkonstruktion der eingangs genannten Art für einen besseren Heizwirkungsgrad zu sorgen.

Diese Aufgabe wird erfindungsgemäß im wesentlichen dadurch gelöst, daß die Strahlheizplatten von der Rückseite, d.h. im Falle einer Strahlheizdecke von der Oberseite, des Heizrohrregisters her unter Freihaltung eines vorderseitigen Abstrahlbereichs des jeweiligen Heizrohres an den Heizrohren montier bar sind.

Die erfundene Strahlungsverkleidung befindet sich daher im wesentlichen zwischen den Heizrohren und/oder an deren Rückseite. Dadurch können die Heizrohre von ihren nicht abgedeckten Bereichen ihre Energie ungehindert in den zu beheizenden Raum abstrahlen. Durch die Anlage der Strahlheizplatten an planen Auflageflächen oder im Bereich ihrer Randaufkantung wird trotzdem die Strahlungsverkleidung in solchem Maße erwärmt, daß sie auch selbst Wärmeenergie in den zu beheizenden Raum abstrahlen kann. Auf diese Weise erhöht sich bei gleichem Montageaufwand die Heizleistung bzw. verringern sich bei gleicher Heizleistung die Montagekosten.

Vorzugsweise nimmt der freigehaltene vorderseitige Abstrahlbereich die gesamte oder nahezu die gesamte Breite des betreffenden Heizrohres ein, um die Wirksamkeit der Strahlheizflächenkonstruktion besonders günstig zu gestalten. Wenn z.B. ebene Strahlplatten auf der ebenen Oberseite von als Vierkantrohre ausgebildeten Heizrohren aufliegen, sind die Seitenwände und die untere Wand der Heizrohre vollständig frei.

Wenn die Heizrohre Rund- oder Vierkantrohre sind, nimmt der freigehaltene vorderseitige Abstahlbereich insbesondere einen Umfangsbereich zwischen 90° und 270° ein. Wenn der vordere Umfangsbereich in dieser Weise zum Beispiel nur geringfügig kleiner als 180° ist, ist die Montage der Strahlplatten auf dem Heizrohrregister besonders einfach, weil die Strahlheizplatten elastisch nachgiebig zwischen den Heizrohren eingeklemmt werden können. Bei einem großen Umfangsbereich von etwa 270° ist das Heizrohr nahezu vollständig unterhalb der Strahlheizplatten angeordnet, so dass die direkte Strahlungsleistung in dem Raum besonders groß ist. In diesem Fall können die Strahlheizplatten zusätzlich als Reflektor der Wärmestrahlung dienen.

Bei Verwendung von Rundrohren weist eine Randaufkantung vorzugsweise einen angerollten Radius auf, welcher dem Außenradius der Heizrohre im wesentlichen entspricht. Entsprechendes gilt für Vier- oder Mehrkantrohre. Bei trapezförmig ausgebildeten Heizrohren bildet vorzugsweise die größere Grundfläche den nach außen gerichteten Abstrahlbereich, so dass die Strahlplatten mit entsprechender schräger Randaufkantung zwischen den seitlichen Schenkelflächen der Heizrohre an- bzw. aufliegen.

Die als Mittelplatten ausgebildeten Strahlheizplatten sind vorzugsweise von der Rückseite des Heizrohrregisters her zwischen je zwei Heizrohre eindrückbar und einrastbar.

Die als Seitenplatten ausgebildeten Strahlplatten liegen einerseits mit einer Randaufkantung an einem Heizrohr an und andererseits sind sie auf einem Querträger der Aufhängung abgestützt.

Dieser Querträger kann beispielsweise auch als Niederhalter der Strahlheizplatten auf dem Heizrohrregister dienen.

Zusätzlich oder statt dessen können die Strahlplatten im Bereich von Randaufkantungen mittels Klemmfedern auf den Heizrohren gehalten sein. Die Klemmfedern bestehen vorzugsweise aus federelastischem Flachmaterial, wie Federstahlblech in Bügelform mit nach innen abgebogenen Klemmlaschen und seitlichen Stützflanschen.

In einer anderen Ausführungsform können sich die Strahlplatten als vorzugsweise durchgehend ebene Platten auf der Rückseite des Heizrohrregisters quer über eine Vielzahl von Heizrohren erstrecken, wobei z.B. die Aufhängung des Heizrohrregisters als Fixiermittel für die ebenen Platten auf dem Heizrohrregister dient. Im Gegensatz zu einzelnen, je zwischen zwei Heizrohren einrastbaren Mittelplatten sind große Strahlplatten schneller zu montieren, da weniger Einzelteile angebracht werden müssen.

Zum Aufbringen der sich quer über mehrere Heizrohre erstreckende Strahlplatten auf den Heizrohren können die Strahlplatten der äußeren Form der Heizrohre angepasste Profilvertiefungen aufweisen, so dass sie auf den Heizrohren des Heizrohrregisters einfach fixierbar sind und ein guter Wärmekontakt zwischen den Strahlplatten im Bereich der Profilvertiefungen besteht. Alternativ können auf den Heizrohren auch der äußeren Form der Heizrohre angepasste Wärmeübergangselemente vorgesehen sein, die beispielsweise eine glatte Wärmeübertragungsfläche zur Abstützung der ebenen Strahlplatten aufweisen. Auf diese Weise lassen sich auch ebene profilfreie Strahlplatten auf runden Heizrohren anbringen, so dass ein guter Wärmeübergang bei großem Abstrahlbereich gegeben ist.

Die Aufhängung des Heizrohrregisters kann einen Querträger aufweisen, wobei die z.B. durchgehend ebenen Strahlplatten z.B. an ihren Rändern zwischen den Querträgern und den Heizrohren einklemmbar sind. Diese Befestigungsart bietet sich insbesondere für kostengünstig herstellbare, ebene Strahlplatten an.

Einfacherweise sind dafür von der Auflagefläche der Heizrohre vorstehende Bolzen oder dgl. Befestigungsmittel ausgebildet, welche durch z.B. am Rand der Strahlplatten vorgesehene Durchführungen hindurchragen sowie in Löchern des Querträgers aufgenommen und dort z.B. mittels Muttern oder Klemmen gesichert sind.

Als besonders vielseitig einsetzbare Querträger eignen sich sogenannte Rostwinkel, bei denen in den rechtwinklig zueinander angeordneten Schenkeln über die Länge verteilt nebeneinander eine Vielzahl von Löchern ausgebildet ist.

Vorzugsweise reichen die ebenen Strahlplatten über die gesamte Breite des Heizrohrregisters, um mehrere Strahlplatten in besonders einfacher Weise modular nebeneinander anordnen zu können.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen:

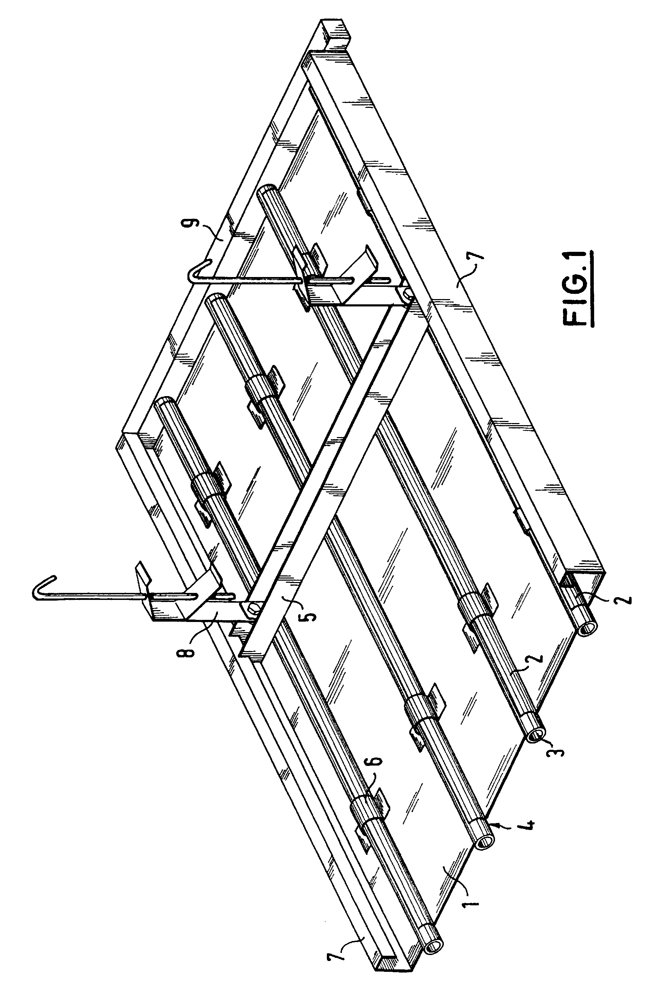

- Fig. 1: in Schrägansicht von oben eine als Strahlheizdecke ausgebildete die Erfindung aufweisende Strahlheizflächenkonstruktion gemäß einem Ausführungsbeispiel,
- Fig. 2: einen Schnitt durch eine Strahlheizflächenkonstruktion gemäß Fig. 1 entlang der Schnittlinie II-II von Fig. 1,
- Fig. 3: im Schnitt schematisch die Randaufkantung einer Strahlplatte bei Vierkantrohren als Heizrohre,
- Fig. 4a bis c: die besondere Ausgestaltung einer Klemmfeder in Schrägansicht, stirnseitiger Ansicht und Seitenansicht, und
- Fig. 5: eine teilweise weggebrochene Ansicht einer die Erfindung aufweisenden Strahlheizflächenkonstruktion gemäß einem weiteren Ausführungsbeispiel von schräg oben.

Die zeichnerisch dargestellte Strahlheizflächenkonstruktion ist als Strahlheizdecke mit einer Abhänger 8 aufweisenden Aufhängung ausgebildet. Die Aufhänger 8 sind an einem als nach oben offenes C-Profil ausgestalteten Querträger 5 befestigt. Die Strahlheizflächenkonstruktion weist ferner Strahlplatten 1 aus verhältnismäßig dünnem Stahl- oder Aluminiumblech auf. Die als Mittelplatten ausgebildeten Strahlplatten 1 haben an ihren beiden einander gegenüberliegenden Längsrändern je eine Randaufkantung 2, mit Hilfe welcher sie an zwei von im Abstand voneinander angeordneten Heizrohren 3 eines Heizrohrregisters zur Wärmeübertragung anliegen. Die als Seitenplatten ausgebildeten Strahlplatten 1 haben an einer Längskante eine entsprechende Randaufkantung 2 zur Anlage an einem Heizrohr 3, während der jeweils äußere Rand als Randabdeckung 7 nach oben innen abgewinkelt ist.

Die Strahlplatten 1 sind von der Rückseite, d.h. in dem zeichnerisch dargestellten Fall einer Strahlheizdecke von der Oberseite, des Heizrohrregisters her unter Freihaltung eines vorderseitigen, d.h. im Falle der Strahlheizdecke nach unten weisenden, Abstrahlbereichs 4 des jeweiligen Heizrohrs 3 an den Heizrohren 3 montiert.

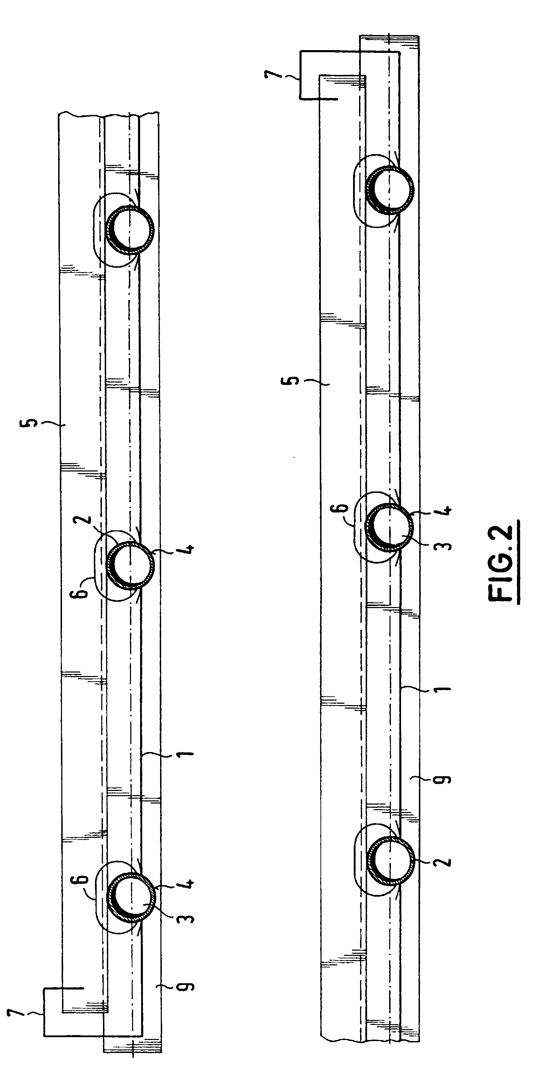

Wie insbesondere aus Fig. 2 ersichtlich, nimmt der freigehaltene vorderseitige Abstrahlbereich 4 die gesamte oder nahezu die gesamte Breite des betreffenden Heizrohres 3 ein. Die Randaufkantungen 2 sind dabei an die als Rundrohre ausgebildeten Heizrohre 3 aufgrund eines angerollten Radius, welcher dem Außenradius der Heizrohre 3 im wesentlichen entspricht, großflächig angepaßt. Wenn entsprechend der zeichnerischen Darstellung der freigehaltene vorderseitige Abstrahlbereich 4 einen Umfangsbereich von etwas weniger als 180° einnimmt, können die als Mittelplatten ausgebildeten Strahlplatten 1 von der Rückseite des Heizrohrregisters her zwischen je zwei Heizrohre 3 gedrückt werden und einrasten, da dies die Elastizität des Plattenmaterials zuläßt. Die als Seitenplatten ausgebildeten Strahlplatten 1 liegen einerseits mit ihrer Randaufkantung 2 an einem Heizrohr 3 an, während sie andererseits mit Hilfe der Randabdeckung 7 auf dem Querträger 5 abgestützt sind. Der Querträger 5 ist so ausgebildet und angeordnet, daß er als Niederhalter der Strahlplatten 1 auf dem Heizrohrregister dient. Die Strahlplatten 1 sind zusätzlich im Bereich ihrer Randaufkantungen 2 mittels Klemmfedern 6 auf den Heizrohren 3 gehalten. Auf diese Weise ist eine einfache Montage möglich.

Zur Vervollständigung eines wasserdurchflossenen Rohrsystems sind die als Rundrohre ausgebildeten Heizrohre 3 über als Vierkantrohre ausgebildete Verteilerrohre 9 und (nicht dargestellte) Sammlerrohre verbunden. Die Verteilerrohre 9 und Sammlerrohre verlaufen quer zu den Heizrohren 3 und sind mit letzteren verschweißt und dann rostschutzlackiert. Auf die Strahlheizflächenkonstruktion kann abschließend eine Isolation aufgelegt werden.

Da erfindungsgemäß die Strahlplatten 1 von oben zwischen die wasserführenden Heizrohre 3 eingebaut sind, können diese ihre Energie ungehindert in den zu beheizenden Raum nach unten abstrahlen. Durch die besondere Form der Randaufkantungen 2 wird trotzdem die Strahlungsverkleidung im gleichen Maße erwärmt, so daß von ihr Wärmeenergie in den darunter liegenden Raum abgestrahlt wird. Auf diese Weise erhöht sich die Heizleistung bei gleichem Montageaufwand bzw. verringert sich die Montagekosten bei gleicher Heizleistung.

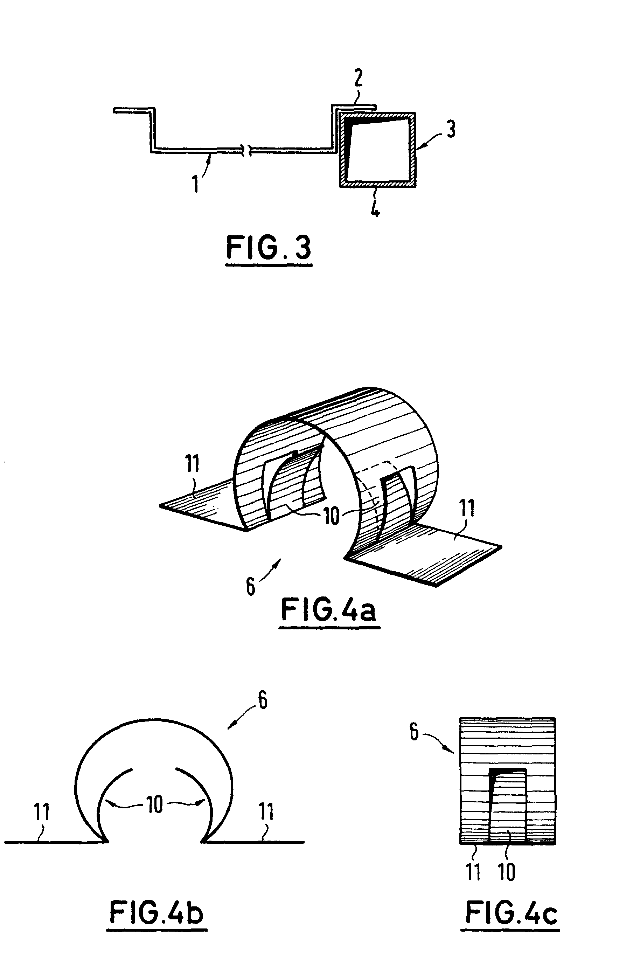

Entsprechend der Darstellung in Fig. 3 können die Rundrohre durch Vier- oder Mehrkantrohre als Heizrohre 3 ersetzt werden. Dann sind die Strahlplatten 1 an ihren Rändern entsprechend abgewinkelt. Der obere horizontale Flansch der Abwinklung nimmt dabei die Hälfte der Breite des Vierkantrohres ein, während der sich nach innen anschließende vertikale Flansch etwa die Hälfte der Höhe des Vierkantrohres einnehmen kann. Bei trapezförmigen Rohren kann auf einen oberen horizontalen Flansch verzichtet werden, weil die Strahlplatten bereits auf den sich nach unten außen schräg verlaufenden Schenkelflächen der Heizrohre fixiert werden.

Die in den Fig. 4a bis 4 c dargestellte Klemmfeder 6 besteht aus federelastischem Flachmaterial, wie Federstahlblech. Sie hat im Wesentlichen Bügelform mit nach seitlich außen horizontal abgewinkelten Stützflanschen 11 für die Abstützung auf der Rückseite der Strahlplatten 1. Im Bereich der Bügelform sind Klemmlaschen 10 ausgestanzt und nach innen weggebogen, welche beim Aufclipsen der Klemmfedern 6 auf die Heizrohre 3 unmittelbar an den Randaufkantungen 2 der Strahlbleche 1 anliegen, um diese mit der entsprechenden Federpannung festzuhalten. Die Klemmfedern 6 können sich auch über die gesamte Länge oder einen größeren Teilabschnitt der Heizrohre 16 erstrecken, um einen besseren Halt und einen wirkungsvolleren Wärmeübergang zu ermöglichen.

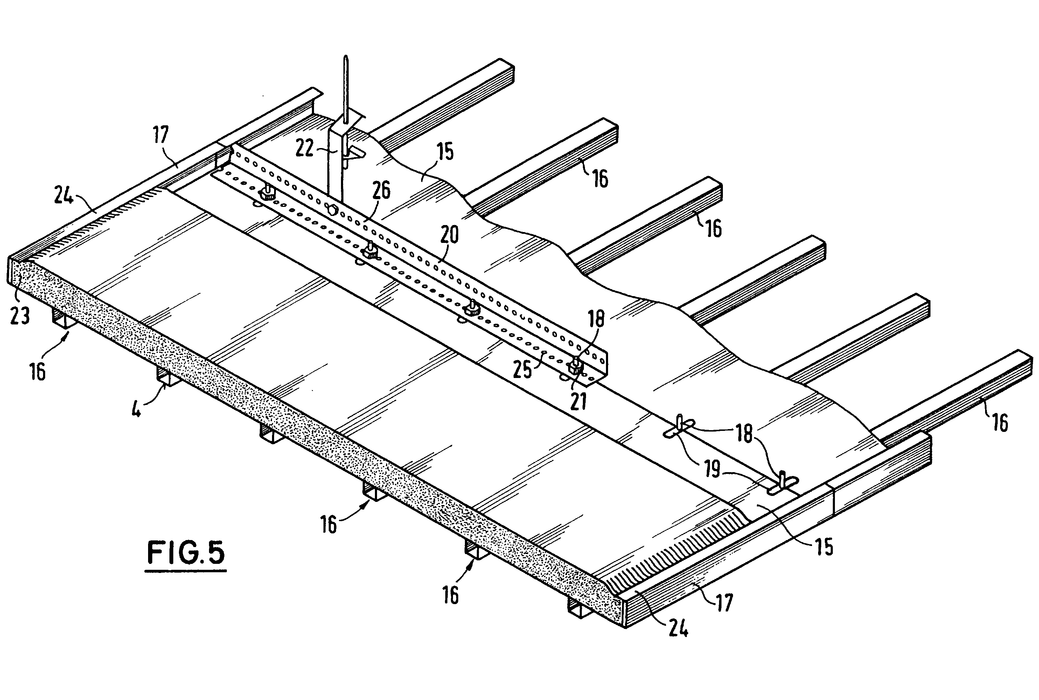

Die in Fig. 5 dargestellte Strahlheizflächenkonstruktion weist großflächige, durchgehend ebene Strahlplatten 15 auf, welche mit ihrer dem Raum zugewandten Unterseite auf als Vierkantrohre ausgebildeten Heizrohren 16 aufliegen, welche Teil eines Heizrohrregisters sind. Die Strahlplatten 15 liegen dicht aneinander quer zu den Heizrohren 16 und reichen z.B. über die gesamte Breite des Heizrohrregisters. Der äußere, in Richtung der Heizrohre 16 verlaufende Rand der Strahlplatten 15 ist als Randabdeckung 17 nach oben innen abgewinkelt. Die Innenflansche 24 dienen z.B. zur Halterung von Isolationsmatten 23.

Von der Auflagefläche der Heizrohre 16 stehen Gewindebolzen 18 in Richtung der Flächennormalen vor, welche durch als Langlöcher in den Rändern der Strahlheizplatten 15 ausgebildete Durchführungen 19 hindurchragen. In dem dargestellten Ausführungsbeispiel befindet sich über dem Stoß zweier Strahlplatten 15 jeweils ein Querträger 20, welcher von einem auf die Gewindebolzen 18 mit Löchern 25 aufsetzbaren Rostwinkel gebildet ist. Die Löcher 25 bilden in den horizontalen Schenkeln der Querträger 20 eine Lochreihe. Mit Muttern 21 wird der Querträger 20 an den Gewindebolzen 18 befestigt. Dabei werden die darunterliegenden Strahlplatten 15 an den Heizrohren 16 festgeklemmt. An den senkrechten Schenkeln der Querträger 20 sind höhenverstellbare Abhänger 22 für das Heizrohrregister angebracht. Hierzu dient ebenfalls eine entsprechende Reihe von Löchern 26.

Durch die großflächigen ebene, über viele Heizrohre 16 reichenden Strahlplatten 15 kann die Montage der erfindungsgemäßen Strahlheizflächenkonstruktion weiter vereinfacht werden, weil bei dem Aufbau weniger Einzelteile montiert werden müssen. Darüber hinaus gewähren die nach drei Seiten freiliegenden, im Querschnitt viereckigen Heizrohre 16 einen vorderseitigen Abstrahlbereich von 270°, wodurch eine besonders hohe Heizleistung erreicht wird. Die Querschnittsgestalt der Heizrohre 16 ist beliebig, nur sollte ggf. mittels zusätzlicher auf den Heizrohren 16 aufgenommener Wärmeübertragungselemente, welche der Form der Heizrohre 16 angepasst sind und auf ihrer Oberseite eine ebene Auflage für die Strahlplatten 25 bilden, für einen guten Wärmeübergang gesorgt werden.

### Bezugszeichenliste:

- 1: Strahlplatten
- 2: Randaufkantungen
- 3: Heizrohre
- 4: Abstrahlbereiche
- 5: Querträger
- 6: Klemmfedern
- 7: Randabdeckung
- 8: Abhänger
- 9: Verteilerrohr
- 10: Klemmlaschen
- 11: Stützflansche

- 15: Strahlplatten
- 16: Heizrohre
- 17: Randabdeckung
- 18: Gewindebolzen
- 19: Durchführungen
- 20: Querträger
- 21: Muttern
- 22: Abhänger
- 23: Isolationsmatten
- 24: Innenflansche
- 25: Löcher
- 26: Löcher

## Patentansprüche

1. Strahlheizflächenkonstruktion, insbesondere Strahlheizdecke, mit einer Aufhängung und mit Strahlplatten ( 1, 15) aus verhältnismäßig dünnem Stahl- oder Aluminiumblech, welche z.B. unter entsprechender Profilierung wenigstens einer Randaufkantung (2) auf bzw. an wenigstens einem von im Abstand voneinander angeordneten Heizrohren (3, 16) eines Heizrohrregisters zur Wärmeübertragung anliegen, **dadurch gekennzeichnet,** daß die Strahlplatten (1, 15) von der Rückseite, d.h. im Falle einer Strahlheizdecke von der Oberseite, des Heizrohrregisters her unter Freihaltung eines vorderseitigen Abstrahlbereichs (4) des jeweiligen Heizrohrs (3, 16) an bzw. auf den Heizrohren (3, 16) montierbar sind.

2. Strahlheizflächenkonstruktion nach Anspruch 1, **dadurch gekennzeichnet,** daß der freigehaltene vorderseitige Abstrahlbereich (4) die gesamte oder nahezu die gesamte Breite des betreffenden Heizrohres (3, 16) einnimmt.

3. Strahlheizflächenkonstruktion nach Anspruch 1 oder 2, **dadurch gekennzeichnet,** daß die Heizrohre (3, 16) Rund- oder Vierkantrohre sind und der freigehaltene vorderseitige Abstrahlbereich (4) einen Umfangsbereich zwischen 90° und 270° einnimmt.

4. Strahlheizflächenkonstruktion nach einem der Ansprüche 1 bis 3, **dadurch gekennzeichnet**, daß bei Rundrohren als Heizrohren (3) eine Randaufkantung (2) einen angerollten Radius aufweist, welcher dem Außenradius der Heizrohre (3) im wesentlichen entspricht, oder bei Mehrkant- insbesondere Vierkantrohren bzw. trapezförmigen Rohren als Heizrohren (3) eine Randaufkantung (2) eine Abwinkelung aufweist, welche der Abwinklung der Heizrohre (3) im wesentlichen entspricht.

5. Strahlheizflächenkonstruktion nach einem der vorhergehenden Ansprüche, **dadurch gekennzeichnet,** daß die als Mittelplatten ausgebildeten Strahlplatten (1) von der Rückseite des Heizrohrregisters her zwischen je zwei Heizrohre (3) drückbar und einrastbar sind.

6. Strahlheizflächenkonstruktion nach einem der vorhergehenden Ansprüche, **dadurch gekennzeichnet,** daß die als Seitenplatten ausgebildeten Strahlplatten (1) einerseits mit einer Randaufkantung (2) an einem Heizrohr (3) anliegen und andererseits auf einem Querträger (5) der Aufhängung abgestützt sind.

7. Strahlheizflächenkonstruktion nach einem der vorhergehenden Ansprüche, **dadurch gekennzeichnet,** daß die Aufhängung einen Querträger (5) aufweist, welcher als Niederhalter der Strahlplatten (1) auf dem Heizrohrregister dient.

8. Strahlheizflächenkonstruktion nach einem der vorhergehenden Ansprüche, **dadurch gekennzeichnet**, daß die Strahlplatten (1) im Bereich von Randaufkantungen (2) mittels Klemmfedern (6) auf den Heizrohren (3) gehalten sind.

9. Strahlheizflächenkonstruktion nach Anspruch 8, **dadurch gekennzeichnet,** daß die Klemmfedern (6) aus federelastischem Flachmaterial, wie Federstahlblech gestanzt und gebogen sind.

10. Strahlheizflächenkonstruktion nach Anspruch 9, **dadurch gekennzeichnet,** daß die Klemmfedern (6) Bügelform mit nach innen abgebogenen Klemmlaschen (10) haben.

11. Strahlheizflächenkonstruktion nach Anspruch 10, **dadurch gekennzeichnet,** daß sich an die Bügelform seitliche Stützflansche (11) für die Abstützung auf der Rückseite der Strahlplatten (1) anschließen.

12. Strahlheizflächenkonstruktion nach einem der Ansprüche 1 bis 3, **dadurch gekennzeichnet,** dass sich die vorzugsweise ebenen Strahlplatten (15) quer über eine Vielzahl von Heizrohren (16) erstrecken.

13. Strahlheizflächenkonstruktion nach Anspruch 12, **dadurch gekennzeichnet,** dass die Strahlplatten (15) der äußeren Form der Heizrohre (16) angepasste Profilvertiefungen aufweisen oder ihnen z.B. bei Rundrohren gesonderte Wärmeübergangselemente zugeordnet sind.

14. Strahlheizflächenkonstruktion nach Anspruch 12 oder 13, **dadurch gekennzeichnet,** dass die Aufhängung des Heizrohrregisters Querträger (20) aufweist und dass die Strahlplatten (15) zwischen den Querträgern (20) und den Heizrohren (16) einklemmbar sind.

15. Strahlheizflächenkonstruktion nach Anspruch 14, **dadurch gekennzeichnet,** dass von der Auflagefläche der Heizrohre (16) Bolzen (18) oder dgl. Befestigungsmittel vorstehen, welche durch z.B. am Rand der Strahlplatten (15) vorgesehene Durchführungen (19) hindurchragen sowie in Löchern des Querträgers (20) aufgenommen und dort z.B. mittels Muttern (21) oder Klemmen sicherbar sind.

16. Strahlheizflächenkonstruktion nach Anspruch 14 oder 15, **dadurch gekennzeichnet,** dass die Querträger (20) als Rostwinkel ausgebildet sind.

17. Strahlheizflächenkonstruktion nach einem der Ansprüche 12 bis 16, **dadurch gekennzeichnet,** dass die Strahlplatten (15) über die gesamte oder wenigstens einen erheblichen Teil der Breite des Heizrohrregisters reichen.

18. Strahlheizflächenkonstruktion nach einem der Ansprüche 12 bis 17, **dadurch gekennzeichnet,** dass mehrere Strahlplatten (15) modular nebeneinander anordenbar sind.
